(19) Europäisches Patentamt
European Patent Office
Office européen des brevets

(11) Veröffentlichungsnummer: **0 210 604 A2**

(12) **EUROPÄISCHE PATENTANMELDUNG**

(21) Anmeldenummer: **86110237.4**

(22) Anmeldetag: **24.07.86**

(51) Int. Cl.⁴: **C08G 69/00**, C08G 69/26, C08G 69/36, C08G 69/40, C08G 81/02

(30) Priorität: **27.07.85 DE 3527037**

(43) Veröffentlichungstag der Anmeldung: **04.02.87 Patentblatt 87/06**

(84) Benannte Vertragsstaaten: **AT BE CH DE FR GB IT LI NL SE**

(71) Anmelder: **Plate Bonn Gesellschaft mit beschränkter Haftung**
**Siemensstrasse 21**
**D-5300 Bonn(DE)**

(72) Erfinder: **de Jong, Eduard**
**Mirabellengarten 3**
**D-5210 Troisdorf-Eschmar(DE)**
Erfinder: **Knipf, Helmut**
**Gärtnerstrasse 34**
**D-5353 Mechernich(DE)**
Erfinder: **Hapelt, Karl-Heinz**
**Im Ellig 67**
**D-5300 Bonn 1(DE)**

(74) Vertreter: **Türk, Dietmar, Dr. rer. nat. et al**
**Türk, Gille + Hrabal Patentanwälte Bruckner Strasse 20**
**D-4000 Düsseldorf 13(DE)**

(54) **Verwendung von Copolyamiden als Heissschmelzkleber und Verfahren zum Verkleben.**

(57) Verwendung von Copolyamiden aus diprimären aliphatischen Diaminen, aliphatischen Dicarbonsäuren und gegebenenfalls Benzoldicarbonsäuren und/oder Aminocarbonsäuren enthaltend in einer Menge von 2 bis 25 Gew.-%, bezogen auf das Gesamtgewicht der Copolymerisate, carboxylterminierte Polybutadiene mit einem $\overline{Mn}$ -(Molekulargewicht nach Zahlenmittel) von 2,000 bis 8,000 und im Mittel 1.8 bis 2.3 Carboxylgruppen pro Molekül als Heißschmelzkleber.

EP 0 210 604 A2

# Verwendung von Copolyamiden als Heißschmelzkleber und Verfahren zum Verkleben

Die vorliegende Erfindung betrifft die Verwendung von Copolyamiden aus primären aliphatischen Diaminen, aliphatischen Dicarbonsäuren und gegebenenfalls Benzoldicarbonsäure und/oder Aminocarbonsäuren als Heißschmelzkleber und Verfahren zum Verkleben.

Es ist bekannt Copolyamide als Heißschmelzkleber zum Verkleben der unterschiedlichsten Substrate einzusetzen. Nachteilig bei den bisher verwendeten Klebstoffen ist die mangelnde Festigkeit der Verklebung bei hochbeanspruchten Verbunden, insbesondere bei Metall/Metall, insbesondere Aluminium/Aluminium-Verbunden und/oder bei der Massivholzkantenverklebung in der Möbel-und Bauindustrie - (Haustüren/Fenster). Insbesondere bei den Aluminium/Aluminium-Verbunden wurde die mangelnde Flexibilität und die schlechte Verklebung insbesondere bei Schäl-Beanspruchung beanstandet. Generell kann gesagt werden, daß der Markt nach Klebstoffsystemen verlangt, welche bei guter Adhäsion, Kohäsion, Flexibilität und leichter Applizierbarkeit, einkomponentig, physiologisch unbedenklich, die Umwelt nicht belastend (lösungsmittelfrei) sind und kurze Taktzeiten zulassen.

Durch geschickte Kombination der polyamidbildenden Komponenten können Produkte mit definierten Kristallinitäten, Schmelztemperaturen, Schmelzviskositäten, etc. erhalten werden.

Bei der Einstellung entsprechender Molekulargewichte resultieren Produkte mit hoher Adhäsion, vorzugsweise zu Metallen und Holzwerkstoffen, und hoher Kohäsion.

Allen diesen Produkten gemeinsam ist bei Verklebungen eine hohe Zugscherfestigkeit, jedoch - trotz hoher Kohäsion -eine niedrige Schälfestigkeit. Bei dynamsichen Belastungen von mit Polyamid-Schmelzklebern verklebten Bauteilen ist jedoch neben einer hohen Zugscherfestigkeit auch eine hohe Schälfestigkeit erforderlich, da bei konstruktiven Verklebungen meist schälende Krafteinwirkungen nicht vermieden werden können.

Es wurde daher versucht, diese Polyamide entweder durch Einpolykondensation von flexibilisierenden polyamidbildenden Monomeren, wie z.B. langkettige Dicarbonsäuren vom Typ Dimerfettsäuren oder langkettige etherhaltige Diamine (DE-C-2361486), oder durch Kombination mit flexibilisierenden nichtpolyamid-Polymeren zu elastifizieren (DE-C-1645414; DE-A-3111206; DE-A2741928) und dadurch eine Erhöhung der Schälfestigkeit zu erreichen. Diese Wege führten jedoch nur zu geringfügigen Erhöhungen der Schälfestigkeit und waren meistens begleitet durch eine Reduzierung der ursprünglich erreichten Zugscherfestigkeiten. Aus EP-A-58329 sind Blockcopolymere bekannt für die Herstellung von Kunstfasern und Formkörpern, die aus Polyamidblöcken und Dienpolymerisatblöcken mit MG 400 bis 5000 bestehen. Gemäß den Beispielen enthalten sie nur Ester-oder OH-Endgruppen mit einem MG von höchstens 1300. Ein Hinweis auf Verwendung als Heißschmelzkleber findet sich nicht.

Der Erfindung liegt die Aufgabe zugrunde, neue Copolyamide zu finden, die eine ausgezeichnete Klebkraft als Heißschmelzkleber besitzen und insbesondere eine verbesserte Schälfestigkeit und/oder Zugscherfestigkeit ergeben.

Es wurde überraschenderweise gefunden, daß diese Aufgabenstellung dadurch gelöst werden kann, daß Copolyamide, wie sie üblicherweise als Heißschmelzkleber eingesetzt werden, die aber als Monomerbestandteile carboxylterminierte Polybutadiene enthalten, zum Verkleben verwendet werden.

Gegenstand der Erfindung ist deshalb die Verwendung von Copolyamiden aus diprimären aliphatischen Diaminen, aliphatischen Dicarbonsäuren und gegebenenfalls Benzoldicarbonsäuren und /oder Aminocarbonsäuren als Heißschmelzkleber, die dadurch gekennzeichnet sind, daß sie in einer Menge von 2 bis 25 Gew.-%, bezogen auf das Gesamtgwicht der Copolymerisate, carboxylterminierte Polybutadiene mit einem $\overline{Mn}$ (Molekulargewicht nach Zahlenmittel) von 2,000 bis 8,000 und im Mittel 1.8 bis 2.3 Carboxylgruppen pro Molekül einpolymerisiert enthalten.

Bevorzugt sind solche carboxyl-terminierten Polybutadiene, die eine Brookfield-Viskosität mPa•S (cP) bei 27°C von 30,000 bis 150,000 aufweisen. Es ist besonders bevorzugt, daß die untere Grenze der Brook field-Viskosität bei etwa 35,000, noch stärker bei etwa 55,000 liegt. Zweckmäßig liegt die obere Grenze der Brookfield-Viskotität bei etwa 80,000, besonders bevorzugt bei etwa 65,000. Verbindungen dieser Art sind als Handelsprodukte bekannt, z.B. unter dem Warenzeichen HYCAR, wobei Produkte mit einer Brookfield-Viskosität von etwa 60,000 besonders geeignet sind.

Das Molekulargewicht nach Zahlenmittel $\overline{Mn}$ liegt zweckmäßig bei mindestens etwa 3,000 und besonders bevorzugt bei mindestens etwa 3,500. Die obere Grenze für das Molekulargewicht $\overline{Mn}$ liegt zweckmäßig bei etwa 6,000, vorzugsweise etwa 5,000 und besonders bevorzugt bei etwa 4,500.

Die Menge der carboxyl-terminierten Polybutadiene beträgt zweckmäßig mindestens etwa 3 Gew.-%, bevorzugt mindestens etwa 4 Gew.-%, bezogen auf das Gesamtgewicht der Copolyamide. Die obere Grenze liegt zweckmäßig bei etwa 20 Gew.-%, besonders bevorzugt bei etwa 17 Gew.-%. Die genaue Menge dieser Polybutadiene im Copolyamid kann durch Versuche in Abhängigkeit von den sonstigen Monomeren, aus denen das Copolyamid besteht, sowie in Abhängigkeit von dem speziellen Verwendungszweck (Verkleben von Metallen, Holzwerkstoffen, und dergleichen) angepaßt werden.

Die gemäß der Erfindung verwendeten carboxyl-terminierten Polybutadiene enthalten, wie schon ausgeführt, im Mittel etwa 1.8 bis 2.3 Carboxylgruppen pro Molekül des Polybutadiens, d.h. sie haben eine mittlere Funktionalität von 1.8 bis 2.3, Bevorzugt besitzen sie eine Funktionalität von etwa 1.9 bis 2.1, wobei, wenn Vernetzungen dem im übrigen in bekannter Weise linearen Polyamide vermieden werden sollen, eine Funktionalität von möglichst 2.0 gewünscht wird. Da es sich um polymere Verbindungen handelt, können naturgemäß die Funktionalität und die sonstigen Parameter nur mit den üblichen für polymere Verbindungen zu berücksichtigenden Schwankungsbreiten verstanden werden, da es sich bekanntlich nicht um einheitliche Verbindungen handelt. Von dem Hersteller der unter dem eingetragenen Warenzeichen HYCAR vertriebenen Produkte wird für diese Polybutadiene die folgende idealisierte Strukturformel genannt:

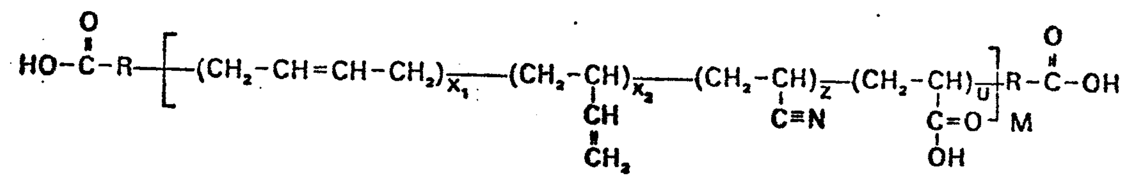

Darin bedeuten M, $X_1$ und $X_2$ Zahlen in einer solchen Höhe, daß das Polymere des oben angegebenen Molekulargewicht besitzt. Die Symbole Z und U betragen sehr kleine Zahlen und im Idealfalle O. Das Symbol R bedeutet einer der im Molekül enthaltenen Gruppen oder eine einfache Bindung, durch die die Carboxylgruppen an die Polymerkette des Polybutadiens gebunden sind.

Die Herstellung der Copolyamide erfolgt in an sich bekannter Weise durch gemeinsame Polykondensation der Komponenten, wie üblich bei Temperaturen im Bereich von etwa 180 bis 300°C und Drücken von etwa 1 bis etwa 30 bar. Es können die üblichen für die Herstellung von Copolyamiden bekannten Katalysatoren, Kettenabbrecher und/oder sonstigen Zusätze sowie Verfahrensbedingungen angewandt werden. Insbesondere wird zweckmäßig unter Luftabfluß, d.h. unter einer Inertgasatmosphäre, insbesondere unter Stickstoff gearbeitet.

Das Molgewicht, der Schmelzbereich, die Viskosität, der MFI-Wert und sonstige Parameter werden in an sich bekannter Weise dem jeweiligen speziellen Verwendungsweck angepaßt. Diese Copolyamide ergeben besonders wärmestandfeste Verklebungen beim Verkleben von Metallen oder Holzwerkstoffen. Bei der Verwendung zum Verkleben von Metallen besitzen die Copolyamide zweckmäßig einen Schmelzberich, ermittelt auf dem Kofler Heiztischmikroskop im Bereich von etwa 150 bis 210°C, zweckmäßig bei etwa 160 bis 200°C. Bei der Verwendung zum Verkleben von Holzwerkstoffen liegt der Schmelzbereich zweckmäßig etwa bei 120 bis 190°C, vorzugsweise etwa 130 bis 180°C. Wie bei Heißschmelzklebern üblich, liegt deren Lösungsviskosität, gemessen als 0.5%ige Lösung in m-Cresol bei 25°C etwa im Bereich von 1.2 bis 1.8. Gemäß der Erfindung können aber auch temperaturempfindlichere Substrate verklebt werden, wobei naturgemäß in bekannter Weise der Schmelzbereich entsprechend angepaßt werden muß.

Der wesentliche Monomer-Bestandteil der Copolyamide gemäß der Erfindung sind also die oben beschriebenen carboxyl-terminierten Polybutadiene in der oben angegebenen Menge. Die anderen Monomer-Bestandteile sind Diamine, Dicarbonsäuren und gegebenenfalls Aminocarbonsäuren, wie sie üblicherweise zur Herstellung von als Heißschmelzkleber geeigneten Copolyamiden verwendet werden. Unter den Begriff Aminocarbonsäuren fallen im Sinne der Erfindung in üblicher Weise auch die entsprechenden Lactame, z.B. Caprolactam, Laurinlactam usw. Natürlich können wie gemäß den Stand der Technik auch die jeweiligen copolyamidbildenden Derivate der Diamine und Dicarbonsäuren eingesetzt werden.

Als aliphatische Diamine werden bevorzugt solche mit 2 bis 12 C-Atomen eingesetzt, wobei hexamethylendiamin, wie bei den bekannten Copolyamiden, bevorzugt ist. Beispiele für andere Diamine, die gemäß der Erfindung verwendet werden können sind Äthylendiamin, Propylendiamin, Trimethylendiamin, Tetramethylendiamin, 2,4-Diaminotetrahydrofuran, 1,4-Diaminocyclohexan, Methylpentamethylendiamin, 1,3-Bis(aminomethyl)-

cyclohexan, 4,4'-Diaminodicyclohexylmethan, Isophorondiamin. Der oben verwendete Begriff "aliphatische Diamine" umfaßt also auch "alicyclische" Diamine. Weitere Beispiele hierfür sind Metaxylendiamin und Piperazin. Diamine, die Polyetherblöcke enthalten, sind u.a. in der DE-C-30 06 961 beschrieben. Diese Polyetherblöcke haben die allgemeine Formel

$$-\left[(CH_2)_n-O\right]_m-$$

worin n mindestens 3, vorzugsweise 3 bis 4, und m 3 bis 30 bedeuten. Andere Polyetherdiamine sind z.B. beschrieben in DE-A-31 11 206 und DE-C-16 45 414.

Als aliphatische Dicarbonsäuren sind bevorzugt solche mit 6 bis 36 C-Atomen. Beispiele hierfür sind Adipinsäure, Azelainsäure, Sebacinsäure, Decandicarbonsäure. Eine besondere Gruppe sind die sogenannten dimerisierten Fettsäuren mit einem gewissen Gehalt von in der Regel 70 Gew.-% bis 100 Gew.-% an dimerer Fettsäure, im Gemisch mit Monocarbonsäuren, aus denen sie hergestellt wurden. Es handelt sich hierbei um bekannte Handelsprodukte, die in großem Umfang zur Herstellung von Copolyamiden verwendet werden (vgl. u.a. DE-A-33 15 529). Eingesetzt werden üblicherweise die bekannten Handelsprodukte, wie sie z.B. unter den nachfolgenden eingetragenen Warenzeichen erhältlich sind: Pripol 1010, Pripol 1014, Unidyme 14, Unidyme 10.

Beispele für Aminocarbonsäuren oder deren Lactame sind solche mit 6 bis 12 C-Atomen wie Caprolactam, Laurinlactam, Aminoundekansäure.

Beispiele für aromatische Carbonsäuren, die in geringer Menge miteingesetzt werden können, sind Terephthalsäure und Isophthalsäure. Bevorzugt sind Copolyamide, die

a) carboxyl-terminiertes Polybutadien mit einem $\overline{Mn}$ (Molekulargewicht nach Zahlenmittel) von 2,000 bis 8,000 und im Mittel 1.8 bis 2.3 Carboxylgruppen pro Molekül in einer Menge von 2 bis 25 Gew.-%, bezogen auf das Gesamtgewicht des Copolyamids,

b) Co-Dicarbonsäure der allgemeinen Formel

HOOC-R-COOH

wobei R einen Alkylrest mit 4 bis 34 Kohlenstoffatomen oder einen Phenylrest darstellt, und/oder Aminocarbonsäuren mit 6 bis 12 C-Atomen oder deren Lactame,

c) diprimäre aliphatische Diamine mit 2 bis 14 C-Atomen, die gegebenenfalls Polyetherblöcke enthalten können, wobei die Gesamtmenge der Carboxylgruppen etwa äquivalent ist der Gesamtmenge der Aminogruppen.

Die Copolyamide gemäß der Erfindung werden in den für Heißschmelzkleber bekannten Applicationsformen verwendet. Bevorzugt ist die Verwendung in Form von feinen Pulvern, Folien, Fäden, Netzen, Granulaten.

Bei der Verwendung als Heißschmelzkleber, insbesondere zum Verkleben von Metallen, wie Aluminium oder zur Kantenverleimung werden die Copolyamide aus der Schmelze auf die zu verklebenden Substrate aufgetragen oder auf diese aufgeschmolzen. Durch anschließendes Anpressen der zu verklebenden Substrate, z.B. des Kantenmaterials an die Kanten der Holzwerkstoffe und Abkühlen wird die Verklebung erzielt. Es können hierfür die üblichen Maschinen eingesetzt werden. Die zu verklebenden Substrate oder zumindest eines der verklebenden Substrate können auch mit den Copolyamiden vorbeschichtet sein, wobei dann unter Erwärmen und Anpressen an das andere zu verklebende Substrat die Verklebung erzielt wird.

Beispiel 1:

Heißschmelzkleber für Metalle

(Aluminium/Edelstahl)

Ein Copolyamid mit der folgenden Monomer-Zusammensetzung:

6.25 kg 11-Aminoundecansäure

9.31 kg Azelainsäure

3.65 kg Hycar CT-RLP 2000X162 CTB® R

(carboxylterminiertes Polybutadien $\overline{Mn}$ etwa 4200 (4000 bis 4500)

Handelsprodukt der Fa. Goodrich Chem Corp.)

5.79 kg Hexamethylendiamin

wurde wie nachfolgend beschrieben durch Polykondensation synthetisiert.

Die Rohstoffe wurden in einen 50 l Schmelzkessel eingewogen. Nach mehrmaligem Spülen mit Stickstoff wurde auf 180°C aufgeheizt. Nach der mittels Rühren durchgeführten Homogenisierung der Schmelze wurde diese unter 2 bis 3 bar $N_2$-Druck in den Rührautoklaven überführt. Dort wurde die Temperatur auf 230°C erhöht. Bei dieser Temperatur wurde unter Rühren und leichtem $N_2$-Strom 2 Stunden nachkondensiert. Das erhaltene Copolyamid wurde über eine Lochdüse in ein Wasserbad ausgesponnen und anschließend granuliert.

Nach Trocknung wurden folgende Produktdaten ermittelt:

Schmelzbereich: 175 -185°C

(Kofler Heiztischmikroskop)

Lösungsviskosität: $\eta$rel 1.50 (0.5 %ig in m-Kresol) bei 25°C

MFI-Wert bei 180°C: 4 g/10 min (DIN 53735)

Das Produkt wurde bei 230°C auf zwei entfettete Aluminiumstreifen folgender Abmessung 14.5/3.0/0.1 cm aufgebracht und unter einem Druck von etwa 50 g/cm² verklebt. Nach 10 Tagen wurde die Schälfestigkeit in Anlehnung an DIN 53282 ermittelt.

Weiterhin wurden die Zugscherfestigkeiten (in Anlehnung an DIN 53283)

überlappten Aluminiumverklebungen ermittelt.

Die ermittelten Werte sind in Tabelle 1 angegeben.

Vergleichsbeispiel 1:

Gemäß Beispiel 5 der DE-C-16 45 414 wurde ein Copolyamid der folgenden Zusammensetzung synthetisiert:

400 g dimerisierte Fettsäure (Pripol® 1010)

4 g Adipinsäure

35,11 g Ethylendiamin

27,85 g 1,11 Diamino-4,8-dioxa-undecan

Die Polykondensation wurde wie in Beispiel 1 der DE-C-16 45 414 beschrieben durchgeführt.

Mit den trockenen Polymeren wurden wie in Beispiel 1 Verklebungen durchgeführt. Die Werte sind in Tabelle 1 angegeben.

Vergleichsbeispiel 2:

Gemäß Beispiel 9 der DE-A 31 11 206 wurde eine Klebstoffmischung hergestellt und wie in Beispiel 1 zum Verkleben eingesetzt.

Die ermittelten Werte sind in Tabelle 1 angegeben.

Vergleichsbeispiel 3:

Gemäß Beispiel 14 der DE-A-27 41 928 wurde ein Heißschmelzkleber hergestellt. Wie oben beschrieben wurde das Adhäsionsverhalten bestimmt. Die ermittelten Werte finden sich in Tabelle 1.

Vergleichsbeispiel 4:

Handelsprodukt der Fa. Plate Bonn GmbH:

Platabond® M 1186 (Copolyamid 12/6.9)

Schmelzbereich: 140 bis 160°C

Lösungsviskosität: 1.5 (0.5 %ig in Kresol) bei 25°C

Die ermittelten Werte finden sich in Tabelle 1.

Aus der Tabelle 1 ist ersichtlich, daß gemäß der Erfindung eine ganz außerordentlich bessere Verklebung erzielt wird als gemäß den Vergleichsversuchen. Darüberhinaus zeigen die Schäldiagramme gemäß der Erfindung eine außerordentlich gleichmäßige Trennfestigkeit im Gegensatz zu den Schäldiagrammen der Vergleichsversuche, bei denen eine außerordentlich unterschiedliche Trennfestigkeit ersichtlich ist. Erwünscht ist eine sehr gleichmäßige Schälfestigkeit nach DIN 53282 ohne große Festigkeitsschwankungen.

**Tabelle 1**

| | | Vergleichsbeisp. 1 gemäß 16 45 414 | 2 gemäß 31 11 206 | 3 gemäß 27 41 928 | 4 Handelspr. Plate | Beispiel 1 gemäß Erfindung |
|---|---|---|---|---|---|---|
| | | polymere Fetts. + Etherdiamin | polymere Fetts. Etherdiamin | elastomeres Polymer | | |
| Aluminium/Aluminium | Zugscher-festigkeit | 12 N/mm² | 4 N/mm² | 20 N/mm² | 25 N/mm² | 20 N/mm² |
| | Schäl-festigkeit | Anriß 25 N/cm<br>Schälung 10 N/cm | Anriß 30 N/cm<br>Schälung 10 N/cm | Anriß 45 N/cm<br>Schälung 10 N/cm | Anriß 30 N/cm<br>Schälung 13 N/cm | Anriß 95 N/cm<br>Schälung 100 N/cm |
| Stahl/Stahl | Zugscher-festigkeit | 18 N/mm² | 3 N/mm² | 18 N/mm² | 20 N/mm² | 22 N/mm² |
| | Schäl-festigkeit | Anriß 90 N/cm<br>Schälung 50 N/cm | Anriß 20 N/cm<br>Schälung 8 N/cm | Anriß 50 N/cm<br>Schälung 35 N/cm | Anriß 10 N/cm<br>Schälung 10 N/cm | Anriß 90 N/cm<br>Schälung 90 N/cm |

Beispiel 2 bis 5:

Es wurden verschiedene Copolyamide analog Beispiel 1 synthetisiert.

Tabelle 2

| | Beispiel 2 | Beispiel 3 | Beispiel 4 | Beispiel 5 |
|---|---|---|---|---|
| Hexamethylendiamin | 176.7 g | 289.2 g | 193.8 g | 173.5 g |
| Piperazin | -- | -- | 45.6 g | 58.6 g |
| Azelainsäure | 186.1 g | 372.3 g | 310.2 g | 279.2 g |
| dimerisierte Fettsäure | 291.2 g | 291.2 g | 304.4 g | 391.4 g |
| carboxylterm. Polybutadien HYCAR® | 146.0 g | 97.3 g | 146.0 g | 97.3 g |
| Schmelzbereich | 193-200°C | 199-204°C | 176-182°C | 163-170°C |
| $\eta$ rel 0.5 %ig m-Cresol | 1.39 | 1.43 | 1.46 | 1.35 |

Vergleichsbeispiele 5 bis 7

Zur Verdeutlichung des Einflusses des carboxylterminierten Polybutadiens wurden verschieden Copolyamide synthetisiert, deren Monomerbestandteile bis auf das erfindungsgemäße Polybutadien gleich sind.

Die Copolyamide wurden wie in Beispiel 1 aufgeführt hergestellt und sind nachfolgend beschrieben:

Tabelle 3

| Vergleichsbeispiele | 5 | 6 | 7 |
|---|---|---|---|
| Hexamethylendiamin | 273.9 g | 189.8 g | 113.9 g |
| Piperazin | --- | 65.1 | --- |
| Azelainsäure | 310.2 | 310.2 | 186.1 |
| dimerisierte Fettsäure | 415.9 | 434.9 | --- |
| 11Aminoundecansäure | --- | --- | 700.0 |
| Schmelzbereich | 185-95 | 144-151 | 148-152 |
| $\eta$ rel | 1.51 | 1.38 | 1.56 |

Die Vergleichsbeispiele 5, 6 und 7 entsprechen in ihrer Zusammensetzung jeweils den Beispielen 2, 4 bzw. 1, wobei die Vergleichsbeispiele nicht das carboxyl-terminierte Polybutadien enthalten.

Die in den Beispielen 2 bis 5 und Vergleichsbeispielen 5 bis 7 beschriebenen Produkte wurden wie in Beispiel 1 beschrieben zur Verklebung von Aluminium verwendet.

Die ermittelten Schäl-Festigkeiten finden sich in Tabelle 4.

## Tabelle 4

| | Beispiel 2 | Beispiel 3 | Beispiel 4 | Beispiel 5 | Vergleichs-beispiel 5 | Vergleichs-beispiel 6 | Vergleichs-beispiel 7 |
|---|---|---|---|---|---|---|---|
| Anriß in N/cm | 80 | 80 | 50 | 30 | 20 | 20 | 20 |
| Schälung in N/cm | 80 | 80 | 40 | 30 | 10 | 15 | 2 |

Beispiel 6:

Wärmestandfeste Massivholzkantenverklebung

Ein Copolyamid mit folgender Monomer-Zusammensetzung:

8.33 kg Pripol® 1010 (dimerisierte Tallölfettsäure, Handelsprodukt der Fa. Unichema)

6.21 kg Azelainsäure

1.38 kg Isophthalsäure

3.62 kg Jeffamine® D 400 (Etherdiamin der Firma Texaco)

5.47 kg Hexamethylendiamin

1.25 kg Hycar® RLP 2000 X 162

carboxylterminiertes Polybutadien der Fa. Goodrich)

wurde wie in Beispiel 1 polykondensiert, wobei die Nachkondensationszeit aber ca. 5 Stunden betrug. Die vom trockenen Produkt ermittelten Meßwerte betragen:

Schmelzbereich: 164 -176°C

Lösungsviskosität: 1.33 (0,5 %ig m Kresol)

MFI Wert bei 180°C: etwa 60 g/10 min (DIN 53735)

Das Granulat uwrde als Heißschmelzkleber mittels einer handelsüblichen Kantenanleim-Maschine vom Typ Ultragranu-Press der Fa. Holz-Her appliziert. Von dem Verbund Spanplatte/Massivholzkante wurde die Wärmestandfestigkeit nach WPS 68 ermittelt. Sie betrug 155°C.

Die Klebfestigkeit wurde bei verschiedenen Massivholzkanten durch einen praxisnahen Test ermittelt:

Nach Lagerung von 5 Min. bzw. 6 Tagen bei Raumklima wurde die Massivholzkante durch Abhebeln mittels eines Stemmeisens von der Spanplatte getrennt. Die freigelegte Klebefläche wurde optisch beurteilt und nach folgendem Schlüssel bewertet:

o = mäßige Haftung, adhäsiver Bruch, glatte Klebefläche

\+ = gute Haftung, adhäsiver Bruch, leichter Holzausriß aus Spanplatte

\+ + = sehr gute Haftung, Materialausriß aus Massivkante

Die Ergebnisse sind in Tabelle 5 aufgeführt.

Vergleichsbeispiel 8:

Gemäß Beispiel 1 der DE-C-23 61 486 wurde ein Polyamid folgender Monomerbausteine synthetisiert.

400 g Tallölfettsäure

71,66 g Azelainsäure

26,0 g Ethylendiamin

55,96 g Piperazin

8,00 g Antioxidans

Das Copolyamid wurde über einen Laborextruder mit der gleichen Menge Kreide vermischt und wie im Beispiel 6 gemäß der Erfindung zur Verklebung verwendet. Die ermittelten Klebeeigenschaften sind in Tabelle 5:

Tabelle 5

| 12 mm Massiv holzkante | Beispiel 6 gemäß der Erfindung | | Vergleichsbeispiel 8 gemäß DE-C 23 61 486 | |
|---|---|---|---|---|
| WPS 68 | 155°C | | 135°C | |
| | 5 Min. | 6 Tage | 5 Min. | 6 Tage |
| Fichte | + + | + + | + | + |
| Kiefer | + + | + + | o | o |
| Eiche | + + | + | o | o |
| Buche | + + | + + | + | + |
| Esche | + + | + | + | + |
| Siepo | + + | + + | + | + |

Vergleichsbeispiel 9:

Einbau von hochmolekularen Ätherdiaminen analog DE-A-31 11 206

Es wurde jedoch ohne Tackifier und nicht mit einem Gemisch von verschiedenen Copolyamiden gearbeitet. Das verwendete Jeffamine D 4000 ist eine Komponente gemäß Anspruch 1, Zeile 15 der DE-A-31 11 206.

Zur Herstellung des Copolyamids wurde folgende Monomerzusammensetzung verwendet:

6.25 kg 11Aminoundecansäure

9.48 kg Azelainsäure

3.58 kg Jaffamine D 4000 (MG 4000)

5.69 kg Hexamethylendiamin
System 6.9/11/D 4000.9 60/25/15 Gew.-%

Lösungsviskosität : $\eta$ rel 1,55

Schmelzbereich : 185 -190°C

Damit wurden zwei Aluminiumbleche verklebt.

Zugscherfestigkeit : 10 N/mm²

Schälfestigkeit : 40 N/cm

Vergleichsbeispiel 10:

Gemäß diesem Vergleichsbeispiel wurden in das Copolyamid als Handelsprodukt erhältliche hochmolekulare Etherdiole eingearbeitet. Für die Herstellung des Copolyamids wurde folgende Monomerzusammensetzung eingesetzt:

6.25 kg 11Aminoundecansäure

9.52 kg Azelainsäure

3.54 kg Terathäne 2900 ®(MG 3250)

5.69 kg Hexamethylendiamin
System 6.9/11/9.T.2900 60/25/15 Gew.-%

Lösungsviskosität : η rel 1,50

Schmelzbereich : 183 -195°C

Damit wurden zwei Aluminiumbleche verklebt.

Zugscherfestigkeit : 20 N/mm²

Schälfestigkeit : 25 N/cm

Vergleichsbeispiel 11:

Es wurde analog DE-A-27 41 928, Beispiel 14, gearbeitet, wobei aber die Polykondensation von allen Komponenten in Gegenwart des A-C-Polymers durchgeführt wurde, d.h. dieses wurde nicht nachträglich in das Copolyamid einkomponiert. Dabei wurde folgende Monomerzusammensetzung eingesetzt:

3.68 kg Dimerfettsäure PRIPOL1010

1.89 kg Adipinsäure

0.37 kg Ethylendiamin

1.11 kg Piperazin

2.96 kg A-C-Polymer
System 2.6/Pip36/AC 35/50/15
Damit wurden zwei Aluminiumbleche verklebt.

Zugscherfestigkeit : 10 N/mm²

Schälfestigkeit : 18 N/cm

Vergleichsbeispiel 12:

Einbau von hochmolekularen Ätherdiaminen analog Beispiel 4 der DE-A-31 11 206, jedoch wurden das Polyethylen und der Tackifier weggelassen. Diese Arbeitsweise entspricht Vergleichsbeispiel 9, jedoch ohne Tackifier, aber mit einen Gemisch von verschiedenen Copolyamiden. Das verwendete Jeffamine D 2000 ist ein Ätherdiamin mit einem Molekulargewicht von etwa 2000 gemäß Anspruch 1, Zeile 15 der DE-A-31 11 206. Das verwendete Jeffamine D 400 ist ein entsprechendes Produkt mit dem Molekulargewicht von etwa 430.

Zunächst wurden im wesentlichen gemäß Beispiel 4 der DE-A-31 11 206 3 Polyamide mit den Bezeichnungen D, I und II hergestellt. Die Monomerzusammensetzungen dieser Polyamide sind nachfolgend angegeben:

Polyamid D 285 g handelsübliche Dimerfettsäure - (Pripol 1010 ®)

27.6 g Ethylendiamin

120 g bis (-2-Aminopropyl)-polypropylenoxid (mg 2000)

(Jeffamine 2000 ®)

System 2.36/Jeffamine 2000.36 67/33 Gew.-%

Polyamid I

100 g Pripol 1010

83 g Ethylendiamin

25.7 g Jeffamine 400 D400 (mg 430)
System 2.36/D400.36 62/38 Gew.-%

Polyamid II

100 g Pripol 1010

28 g Azelainsäure

5.3 g Ethylendiamin

21 g Piperazin
System 2.36/Pip.9/Pip. 36 37/26/37 Gew.-%

Aus diesen 3 Polyamiden wurde in der Schmelze ein Gemisch der Polyamide hergestellt, und zwar aus folgenden Mengen:

25 Gew.-% Polyamid D

50 Gew.-% Polyamid I

25 Gew.-% Polyamid II

Damit wurden 2 Aluminiumbleche wie oben beschrieben verklebt, wobei folgende Werte erhalten wurden:

Zugscherfestigkeit : 5 N/mm²

Schälfestigkeit : 5 N/cm.

Dieses Vergleichsbeispiel zeigt, daß ein Gemisch der in DE-A-31 11 206 beschriebenen Polyamide, als Schmelzblend hergestellt, im Sinne der vorliegenden Erfindung unbrauchbar ist.

## Ansprüche

1. Verwendung von Copolyamiden aus diprimären aliphatischen Diaminen, aliphatischen Dicarbonsäuren und gegebenenfalls Benzoldicarbonsäuren und/oder Aminocarbonsäuren als Heißschmelzkleber, **dadurch gekennzeichnet**, daß sie in einer Menge von 2 bis 25 Gew.-%, bezogen auf das Gesamtgewicht der Copolyamide, carboxylterminierte Polybutadiene mit einem $\overline{Mn}$ - (Molekulargewicht nach Zahlenmittel) von 2.000 bis 8.000 und im Mittel 1.8 bis 2.3 Carboxylgruppen pro Molekül einpolymerisiert enthalten.

2. Verwendung von Copolyamiden nach Anspurch 1, dadurch gekennzeichnet, daß sie carboxylterminierte Polybutadiene mit einer Brookfield-Viskosität mPa•S (cP) bei 27°C von 30,000 bis 150,000 enthalten.

3. Verwendung von Copolyamiden nach einen oder mehreren der Ansprüche 1 bis 2, dadurch gekennzeichnet, daß sie carboxyl-terminierte Polybutadiene mit einem Molekulargewicht $\overline{Mn}$ von 3,500 bis 5,000 enthalten.

4. Verwendung von Copolyamiden nach einem oder mehreren der Ansprüche 1 bis 3, dadurch gekennzeichnet, daß sie die carboxyl-terminierten Polybutadiene in einer Menge von 4 bis 17 Gew.-%, bezogen auf das Gesamtgewicht der Copolyamide, enthalten.

5. Verwendung von Copolyamiden nach einem oder mehreren der Ansprüche 1 bis 4, dadurch gekennzeichnet, daß sie enthalten

a) carboxyl-terminiertes Polybutadien mit einem $\overline{Mn}$ (Molekulargewicht nach Zahlenmittel) von 2,000 bis 8,000 und im Mittel 1.8 bis 2.3 Carboxylgruppen pro Molekül in einer Menge von 2 bis 25 Gew.-%, bezogen auf das Gesamtgewicht des Copolyamids,

b) Co-Dicarbonsäuren der allgemeinen Formel

HOOC-R-COOH

wobei R ein Alkylrest mit 4 bis 34 Kohlenstoffatomen oder einen Phenylrest darstellt, und/oder Aminocarbonsäuren mit 6 bis 12 Atomen oder deren Lactame,

c) diprimäre aliphatische Diamine mit 2 bis 14 C-Atomen, die gegebenenfalls Polyetherblöcke enthalten können, wobei die Gesamtmenge der Carboxylgruppen etwa äquivalent ist der Gesamtmenge der Aminogruppen.

6. Verwendung nach einem oder mehreren der Ansprüche 1 bis 5 zum Verkleben von Metallen, insbesondere Aluminium.

7. Verwendung nach einem oder mehreren der Ansprüche 1 bis 5 als Kantenleim für wärmestandfeste Kantenverleimungen von Holzwerkstoffen.

8. Verfahren zum Verkleben von zwei Substraten mittels Heißschmelzklebern aus Copolyamiden aus diprimären aliphatischen Diaminen, aliphatischen Dicarbonsäuren und gegebenenfalls Benzoldicarbonsäuren und/oder Aminocarbonsäuren, **dadurch gekennzeichnet**, daß sie in einer Menge von 2 bis 25 Gew.-%, bezogen auf das Gesamtgewicht der Copolyamide, carboxyl-terminierte Polybutadiene mit einem $\overline{Mn}$ (Molekulargewicht nach Zahlenmittel) von 2.000 bis 8.000 und im Mittel 1.8 bis 2.3 Carboxylgruppen pro Molekül enthalten.